# EUROPÄISCHE PATENTSCHRIFT

(11) **EP 3 541 672 B1**
(45) Veröffentlichungstag und Bekanntmachung des Hinweises auf die Patenterteilung: **12.01.2022**
(21) Anmeldenummer: 17772392.1
(22) Anmeldetag: 22.09.2017
(51) Int. Cl.: B60T 7/12, B60T 8/88, B60T 13/74

(54) **VERFAHREN ZUM SELBSTTÄTIGEN ABBREMSEN EINES FAHRZEUGS**
METHOD FOR AUTOMATICALLY DECELERATING A VEHICLE
PROCÉDÉ POUR FREINER UN VÉHICULE DE MANIÈRE AUTOMATIQUE

(30) Priorität: 16.11.2016 DE 102016222522
(43) Veröffentlichungstag der Anmeldung: 25.09.2019
(73) Patentinhaber: Robert Bosch GmbH, 70442 Stuttgart (DE)
(72) Erfinder: NIJAKOWSKI, Klaus-Dieter, 74074 Heilbronn (DE); ENGLERT, Andreas, 74199 Untergruppenbach (DE); PUTZER, Tobias, 74177 Bad Friedrichshall (DE)
(86) Internationale Anmeldenummer: PCT/EP2017/074009
(87) Internationale Veröffentlichungsnummer: WO 2018/091177

(56) Entgegenhaltungen:
- WO-A1-2006/010735
- WO-A2-2010/146158
- DE-A1-102012 202 175

## Beschreibung

Die Erfindung bezieht sich auf ein Verfahren zum selbsttätigen, fahrerunabhängigen Abbremsen eines Fahrzeugs, das mit einem Bremssystem mit einer hydraulischen Fahrzeugbremse und mit einem Rückfallbremssystem ausgestattet ist.

### Stand der Technik

Aus der DE 10 2004 004 992 A1 ist ein Bremssystem für ein Fahrzeug bekannt, das eine hydraulische Fahrzeugbremse sowie eine elektromechanische Bremsvorrichtung mit einem elektrischen Bremsmotor umfasst. Im normalen Bremsbetrieb wird die hydraulische Fahrzeugbremse aktiviert, um das Fahrzeug zu verzögern. Die elektromechanische Bremsvorrichtung wird als Parkbremse eingesetzt und erzeugt über den elektrischen Bremsmotor eine Bremskraft im Fahrzeugstillstand, wobei der elektrische Bremsmotor auf den gleichen Bremskolben wie die hydraulische Fahrzeugbremse wirkt und einen Bremsbelag an der Stirnseite des Bremskolbens gegen eine Bremsscheibe verstellt.

Die WO 2006/010735 A1 offenbart eine Bremsvorrichtung mit hydraulischer Betriebsbremsanlage und elektrischer Feststellbremsanlage. Während des Betriebs der Betriebsbremsanlage wird aus einem Vergleich der vom Fahrer erzeugten Druckanforderung mit dem aktuellen Bremsdruck festgestellt, ob ein Defekt in der Betriebsbremsanlage vorliegt. Falls ein Defekt erkannt wird, wird die Feststellbremsanlage aktiviert.

Die WO 2010/146158 A2 bezieht sich auf eine Kraftfahrzeugbremsanlage mit hydraulischer Betriebsbremse und elektromechanischer Feststellbremse. Um eine Reduktion der Belastung von Komponenten der elektromechanischen Feststellbremse zu erreichen, wird der hydraulische Druck herabgesetzt, was dadurch erreicht wird, dass die elektromechanische Feststellbremse zugeschaltet wird.

### Offenbarung der Erfindung

Das erfindungsgemäße Verfahren wird zum selbsttätigen und fahrerunabhängigen Abbremsen eines Fahrzeuges eingesetzt, das mit einer hydraulischen Fahrzeugbremse ausgestattet ist. Die hydraulische Fahrzeugbremse weist Radbremseinrichtungen an den Fahrzeugrädern auf, die jeweils über einen Bremskreis der Fahrzeugbremse mit Hydraulikfluid versorgt werden, das einen Bremskolben gegen eine Bremsscheibe verstellt. Der hydraulische Bremsdruck kann mithilfe eines Bremsdruckstellers eingestellt werden, beispielsweise einem elektronischen Stabilitätsprogramm (ESP) mit einer motorisch angetriebenen Hydraulikpumpe, wobei der Bremsdrucksteller über einen Regler auf einen definierten Sollwert einstellbar ist.

Das Bremssystem des Fahrzeugs umfasst auch ein Rückfallbremssystem, das in Fällen aktiviert werden kann, in denen die hydraulische Fahrzeugbremse insbesondere aufgrund eines Fehlers teilweise oder vollständig ausfällt und den gewünschten hydraulischen Bremsdruck nicht bereitstellen kann. Bei dem Rückfallbremssystem handelt es sich entweder um eine in die hydraulische Fahrzeugbremse integrierte, zusätzliche Bremseinrichtung wie zum Beispiel ein weiterer Bremsdrucksteller, insbesondere einen elektromechanischen Bremskraftverstärker, wobei das Rückfallbremssystem unabhängig von den weiteren Komponenten der hydraulischen Fahrzeugbremse ansteuerbar ist. Das Rückfallbremssystem kann gegebenenfalls auch auf einer nicht-hydraulischen Funktionsweise beruhen, beispielsweise in der Ausführung als elektromechanische Bremsvorrichtung mit einem elektrischen Bremsmotor, der entweder auf den gleichen Bremskolben wie die hydraulische Fahrzeugbremse oder auf einen separaten Bremskolben wirkt.

Zur Durchführung des selbsttätigen Abbremsvorganges wird im Regelfall - bei funktionierender hydraulischer Fahrzeugbremse - das Fahrzeug über eine Betätigung des Bremsdruckstellers gebremst. Dies erfolgt in definierten Bremssituationen, welche es erfordern, dass der Bremsdrucksteller in der hydraulischen Fahrzeugbremse aktiviert wird, beispielsweise während eines selbsttätig und fahrerunabhängig durchgeführten Parkvorganges des Fahrzeugs. Die Aktivierung des Bremsdruckstellers erfolgt in einer geregelten Weise, indem sensorisch eine oder mehrere Fahrzustands- und/oder Umgebungsgrößen ermittelt werden und in einem Regler der hydraulischen Fahrzeugbremse ein Sollwert für den Bremsdrucksteller erzeugt wird, auf den dieser eingestellt wird. Beispielsweise wird zur Durchführung eines selbsttätigen Parkvorganges sensorisch der zur Verfügung stehende Bremsweg bis zum Stillstand des Fahrzeugs fortlaufend ermittelt und der Berechnung eines Sollwerts für den Bremsdrucksteller in der hydraulischen Fahrzeugbremse zugrunde gelegt.

Bei dem erfindungsgemäßen Verfahren wird das Rückfallbremssystem zur Erzeugung einer Bremskraft für den Fall aktiviert, dass in dem Regler der hydraulischen Fahrzeugbremse der Sollwert, welcher selbsttätig fortlaufend bestimmt wird, einen Schwellenwert übersteigt. In diesem Fall muss mit einer erhöhten Wahrscheinlichkeit von einem Fehler in einer Komponente der hydraulischen Fahrzeugbremse ausgegangen werden. Bei komfortbetonten Bremsvorgängen wie zum Beispiel einem automatisierten und fahrerunabhängigen Parkvorgang des Fahrzeugs werden auch im Regelfall, bei funktionierender hydraulischer Fahrzeugbremse, nur verhältnismäßig geringe hydraulische Bremsdrücke erzeugt. Steigt der Bremsdruck aufgrund eines Fehlers in der hydraulischen Fahrzeugbremse immer weiter an, indem der Regler versucht, innerhalb der zur Verfügung stehenden Bremsstrecke das Fahrzeug bis zum Stillstand abzubremsen, so deutet dies auf einen Fehler hin, falls der Sollwert den zugeordneten Schwellenwert übersteigt. In diesem Fall kann das Rückfallbremssystem zur ergänzenden oder ausschließlichen Erzeugung einer Bremskraft aktiviert werden. Auf diese Weise kann der selbsttätige und fahrerunabhängig durchgeführte Bremsvorgang in gewünschter Weise und ohne wesentliche Komfort- oder Sicherheitseinbußen zu Ende gebracht werden.

Das Verfahren wird vorzugsweise zum Durchführen eines selbsttätigen Parkvorgangs durchgeführt. Es ist aber auch möglich, allgemein das Verfahren bei einem selbsttätigen, fahrerunabhängigen Bremsvorgang durchzuführen, bei dem im Regler, der dem einstellbaren Bremsdrucksteller zugeordnet ist, fortlaufend und adaptiv ein Sollwert ermittelt wird, um das Fahrzeug in der Weise abzubremsen, dass definierte Randbedingungen eingehalten werden, zum Beispiel ein maximal zur Verfügung stehender Bremsweg oder aus Komfortgründen eine maximal zulässige Bremsverzögerung.

Gemäß einer vorteilhaften Ausführung handelt es sich bei dem Sollwert, der fortlaufend und adaptiv bestimmt wird und dem Regler als Eingangswert zugeführt wird, um den Sollbremsdruck in der hydraulischen Fahrzeugbremse. Über eine Betätigung des Bremsdruckstellers in der hydraulischen Fahrzeugbremse kann der Sollbremsdruck eingestellt werden. Es kommen aber auch sonstige Sollwerte in Betracht, die dem Regler des Bremsdruckstellers als Eingangswert zugeführt werden, beispielsweise der fortlaufend ermittelte, noch zur Verfügung stehende Restbremsweg, die Bremskraft, die Bremsverzögerung oder dergleichen.

Bei dem Rückfallbremssystem, das bei Überschreitung des Schwellenwerts aktiviert wird, handelt es sich vorzugsweise um eine Feststell- bzw. Parkbremse, die als elektromechanische Bremsvorrichtung mit einem elektrischen Bremsmotor ausgeführt ist. Die elektromechanische Bremsvorrichtung wird üblicherweise zum dauerhaften Erzeugen einer Feststell- bzw. Parkbremskraft zum Festsetzen des Fahrzeugs im Stillstand eingesetzt. Gegebenenfalls kann die elektromechanische Bremsvorrichtung auch bei fahrendem Fahrzeug zur Erzeugung einer Bremskraft eingesetzt werden, insbesondere im Fall des vorbeschriebenen Überschreitens eines Sollwertes in der hydraulischen Fahrzeugbremse.

Zusätzlich oder alternativ zu der elektromechanischen Bremsvorrichtung kann das Rückfallbremssystem auch in Form eines zweiten hydraulischen Bremsdruckstellers vorliegen, der entsprechend aktiviert wird, falls der Sollwert in der hydraulischen Fahrzeugbremse den Schwellenwert überschreitet. Der zweite hydraulische Bremsdrucksteller, beispielsweise ein elektromechanischer Bremskraftverstärker, wird während des selbsttätigen, fahrerunabhängigen Abbremsvorgangs im Regelfall, bei funktionierenden Komponenten der hydraulischen Fahrzeugbremse, nicht aktiviert und kommt nur in dem Fall zum Einsatz, dass der Sollwert in der hydraulischen Fahrzeugbremse den Schwellenwert übersteigt.

Der erste Bremsdrucksteller, der im Regelfall bei dem selbsttätigen und fahrerunabhängigen Abbremsvorgang aktiviert wird, ist vorzugsweise die Hydraulikpumpe des elektronischen Stabilitätsprogrammes ESP. In dem zugeordneten Regel- bzw. Steuergerät werden auf der Grundlage der zugeführten Sollwerte Stellsignale zur Ansteuerung der Hydraulikpumpe generiert.

Der erste Bremsdrucksteller, der im Regelfall bei dem selbsttätigen und fahrerunabhängigen Abbremsvorgang aktiviert wird, kann gegebenenfalls von dem elektromechanischen Bremskraftverstärker in der hydraulischen Fahrzeugbremse gebildet sein. Bei dem Rückfallbremssystem handelt es sich in diesem Fall entweder um die Hydraulikpumpe des ESP-Systems oder um die elektromechanische Bremsvorrichtung mit dem elektrischen Bremsmotor.

Im Fall eines automatisierten Parkvorgangs wird, gemäß weiterer zweckmäßiger Ausführung, das Fahrzeug nach dem Erreichen des Stillstands mithilfe einer Feststellbremse dauerhaft gegen Wegrollen gesichert. Bei der Feststellbremse handelt es sich insbesondere um die elektromechanische Bremsvorrichtung mit dem elektrischen Bremsmotor, der den Bremskolben gegen die Bremsscheibe verstellt.

Zusätzlich oder alternativ zu der Feststellbremse kann nach dem Stillstand das Fahrzeug auch mithilfe einer Getriebesperrklinke im Getriebe des Fahrzeugs dauerhaft gegen Wegrollen gesichert werden.

Die vorbeschriebenen Verfahrensschritte laufen in einem Regel- bzw. Steuergerät ab, in welchem Stellsignale zur Ansteuerung der verschiedenen Komponenten des Bremssystems erzeugt werden.

Die Erfindung bezieht sich des Weiteren auf ein Bremssystem in einem Fahrzeug, das eine hydraulische Fahrzeugbremse mit einem einstellbaren Bremsdrucksteller und ein Rückfallbremssystem zur Erzeugung zusätzlicher Bremskraft aufweist. Das Bremssystem umfasst auch das Regel- bzw. Steuergerät zur Ansteuerung der einstellbaren Komponenten des Bremssystems. In dem Regel- bzw. Steuergerät werden auch Sollwerte zur Ansteuerung eines Reglers erzeugt, welcher Bestandteil des Regel- bzw. Steuergerätes sein kann und in dem Stellsignale zur Ansteuerung des Bremsdruckstellers in der hydraulischen Fahrzeugbremse bzw. zur Ansteuerung des Rückfallbremssystems erzeugt werden.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer hydraulischen Fahrzeugbremse mit einem Bremskraftverstärker, wobei die Radbremseinrichtungen der Fahrzeugbremse an der Fahrzeughinterachse zusätzlich mit einer elektromechanischen Bremsvorrichtung mit einem elektrischen Bremsmotor ausgestattet sind,
- Fig. 2: einen Schnitt durch eine elektromechanische Bremsvorrichtung mit einem elektrischen Bremsmotor,
- Fig. 3: ein Ablaufschema mit Verfahrensschritten zum selbsttätigen, fahrerunabhängigen Abbremsen eines Fahrzeugs.

In den Figuren sind gleiche Bauteile mit gleichen Bezugszeichen versehen.

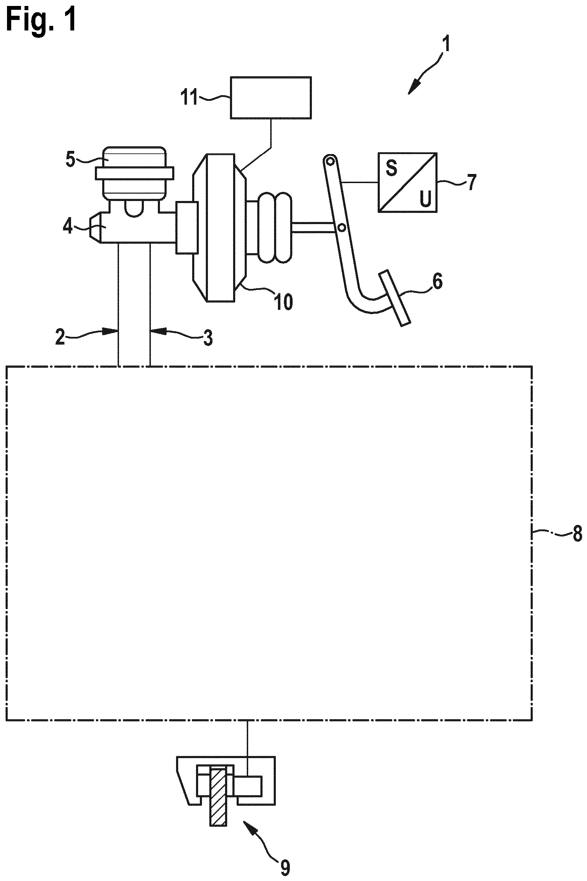

Die in Fig. 1 dargestellte hydraulische Fahrzeugbremse 1 für ein Fahrzeug umfasst einen Vorderachs-Bremskreis 2 und einen Hinterachs-Bremskreis 3 zur Versorgung und Ansteuerung von Radbremseinrichtungen 9 an jedem Rad des Fahrzeugs mit einem unter Bremsdruck stehenden Bremsfluid. Die beiden Bremskreise 2, 3 sind an einen gemeinsamen Hauptbremszylinder 4 angeschlossen, der über einen Bremsflüssigkeitsvorratsbehälter 5 mit Bremsfluid versorgt wird. Der Hauptbremszylinderkolben innerhalb des Hauptbremszylinders 4 wird vom Fahrer über das Bremspedal 6 betätigt, der vom Fahrer ausgeübte Pedalweg wird über einen Pedalwegsensor 7 gemessen. Zwischen dem Bremspedal 6 und dem Hauptbremszylinder 4 befindet sich ein elektromechanischer Bremskraftverstärker 10, der einen Elektromotor umfasst, welcher bevorzugt über ein Getriebe den Hauptbremszylinder 4 betätigt. Der elektromechanische Bremskraftverstärker 10 bildet einen Bremsdrucksteller, der gegebenenfalls auch fahrerunabhängig zur selbsttätigen Erzeugung eines Bremsdrucks angesteuert werden kann.

Die vom Pedalwegsensor 7 gemessene Stellbewegung des Bremspedals 6 wird als Sensorsignal an ein Regel- bzw. Steuergerät 11 übermittelt, in welchem Stellsignale zur Ansteuerung des Bremskraftverstärkers 10 erzeugt werden. Die Versorgung der Radbremseinrichtungen 9 mit Bremsfluid erfolgt in jedem Bremskreis 2, 3 über verschiedene Schaltventile, die gemeinsam mit weiteren Aggregaten Teil einer Bremshydraulik 8 sind. Zur Bremshydraulik 8 gehört des Weiteren eine Hydraulikpumpe, die Bestandteil eines elektronischen Stabilitätsprogramms (ESP) ist. Auch die Hydraulikpumpe des elektronischen Stabilitätsprogramms bildet einen Bremsdrucksteller zur fahrerunabhängigen, selbsttätigen Erzeugung eines Bremsdrucks. Die Hydraulikpumpe wird ebenfalls von dem Regel- bzw. Steuergerät 11 angesteuert.

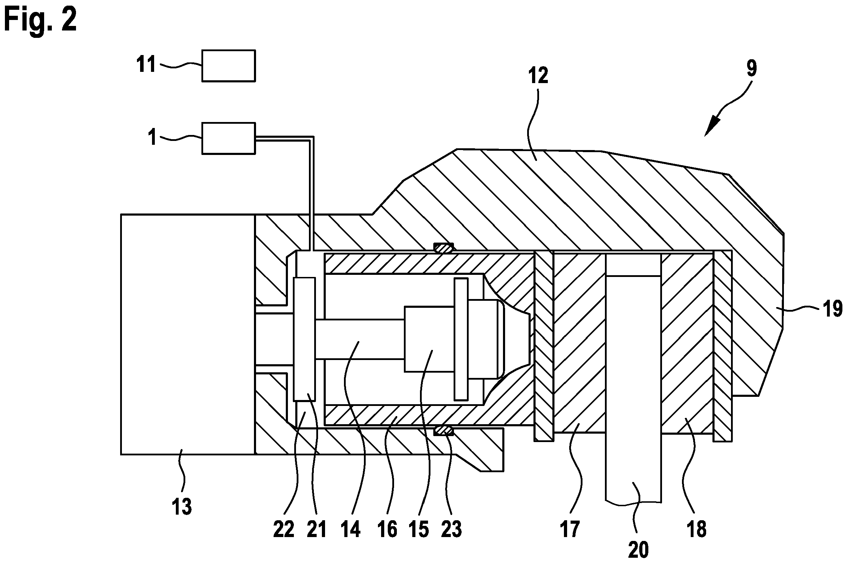

In Fig. 2 ist die Radbremseinrichtung 9, die an einem Rad an der Hinterachse des Fahrzeugs angeordnet ist, im Detail dargestellt. Die Radbremseinrichtung 9 ist Teil der hydraulischen Fahrzeugbremse 1 und wird aus dem Hinterachs-Bremskreis mit Bremsfluid 22 versorgt. Die Radbremseinrichtung 9 weist außerdem eine elektromechanische Bremsvorrichtung auf, die bevorzugt als Feststellbremse zum Festsetzen eines Fahrzeugs im Stillstand eingesetzt wird, jedoch auch bei einer Bewegung des Fahrzeugs, insbesondere bei kleineren Fahrzeuggeschwindigkeiten unterhalb eines Geschwindigkeits-Grenzwerts zum Abbremsen des Fahrzeugs eingesetzt werden kann.

Die elektromechanische Bremsvorrichtung umfasst einen Bremssattel 12 mit einer Zange 19, welche eine Bremsscheibe 20 übergreift. Als Stellglied weist die Bremsvorrichtung einen Gleichstrom-Elektromotor als Bremsmotor 13 auf, dessen Rotorwelle eine Spindel 14 rotierend antreibt, auf der eine Spindelmutter 15 rotationsfest gelagert ist. Bei einer Rotation der Spindel 14 wird die Spindelmutter 15 axial verstellt. Die Spindelmutter 15 bewegt sich innerhalb eines Bremskolbens 16, der Träger eines Bremsbelags 17 ist, welcher von dem Bremskolben 16 gegen die Bremsscheibe 20 gedrückt wird. Auf der gegenüberliegenden Seite der Bremsscheibe 20 befindet sich ein weiterer Bremsbelag 18, der ortsfest an der Zange 19 gehalten ist. Der Bremskolben 16 ist auf seiner Außenseite über einen umgreifenden Dichtring 23 druckdicht gegenüber dem aufnehmenden Gehäuse abgedichtet.

Innerhalb des Bremskolbens 16 kann sich die Spindelmutter 15 bei einer Drehbewegung der Spindel 14 axial nach vorne in Richtung auf die Bremsscheibe 20 zu bzw. bei einer entgegen gesetzten Drehbewegung der Spindel 14 axial nach hinten bis zum Erreichen eines Endanschlags 21 bewegen. Zum Erzeugen einer Klemmkraft beaufschlagt die Spindelmutter 15 die innere Stirnseite des Bremskolbens 16, wodurch der axial verschieblich in der Bremsvorrichtung gelagerte Bremskolben 16 mit dem Bremsbelag 17 gegen die zugewandte Stirnfläche der Bremsscheibe 20 gedrückt wird. Die Spindelmutter 15 stellt ein Übertragungsglied zwischen dem Bremsmotor und dem Bremskolben dar.

Für die hydraulische Bremskraft wirkt auf den Bremskolben 16 der hydraulische Druck des Bremsfluids 22 aus der hydraulischen Fahrzeugbremse 1. Der hydraulische Druck kann auch im Fahrzeugstillstand bei Betätigung der elektromechanischen Bremsvorrichtung unterstützend wirksam sein, so dass sich die Gesamt-Bremskraft aus dem elektromotorisch gestellten Anteil und dem hydraulischen Anteil zusammensetzt. Während der Fahrt des Fahrzeugs ist entweder nur die hydraulische Fahrzeugbremse aktiv oder sowohl die hydraulische Fahrzeugbremse als auch die elektromechanische Bremsvorrichtung oder nur die elektromechanische Bremsvorrichtung, um Bremskraft zu erzeugen. Die Stellsignale zur Ansteuerung sowohl der einstellbaren Komponenten der hydraulischen Fahrzeugbremse 1 als auch der elektromechanischen Radbremseinrichtung 9 werden in dem Regel- bzw. Steuergerät 11 erzeugt.

Während eines selbsttätigen und fahrerunabhängigen Parkvorganges muss das Fahrzeug ohne Fahrereingriff und mit hoher Funktionssicherheit abgebremst werden. Auf der Grundlage sensorisch ermittelter Informationen wird hierfür beispielsweise fortlaufend der Bremsweg ermittelt, der während des Parkvorgangs aktuell noch zur Verfügung steht. Die hydraulische Fahrzeugbremse wird durch Ansteuerung eines ihrer Bremsdrucksteller selbsttätig und fahrerunabhängig zur Erzeugung eines gewünschten Sollbremsdrucks angesteuert. Dies erfolgt insbesondere über die Hydraulikpumpe des elektronischen Stabilitätsprogramms, die über Stellsignale des Regel- und Steuergerätes 11 angesteuert wird. Die Ansteuerung erfolgt in einer geregelten Weise, indem fortlaufend sensorisch Umfeld- und Fahrzustandsgrößen ermittelt werden, auf deren Grundlage in einem Regler Stellsignale zur Ansteuerung des Bremsdruckstellers erzeugt werden, insbesondere der Hydraulikpumpe des elektronischen Stabilitätsprogramms. Der Regler kann gegebenenfalls Bestandteil des Regel- bzw. Steuergerätes sein oder auch als eine separat hiervon ausgebildete Einheit ausgeführt sein.

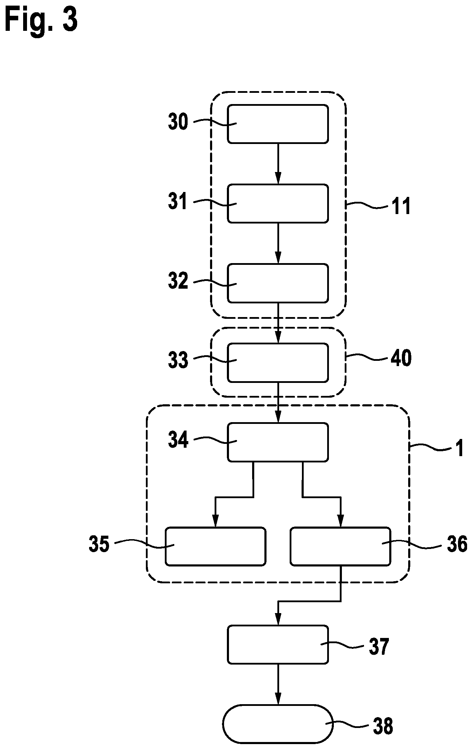

Fig. 3 zeigt ein Ablaufschema mit Verfahrensschritten zum selbsttätigen und fahrerunabhängigen Abbremsen eines Fahrzeugs während eines autonom durchgeführten Parkvorgangs.

Der erste Verfahrensschritt 30 kennzeichnet den Beginn des Parkvorgangs, der beispielsweise manuell vom Fahrer ausgelöst wird. Mithilfe der Sensorik im Fahrzeug werden im Schritt 31 Umfeldinformationen, beispielsweise Hindernisse erfasst sowie Fahrzustandsgrößen wie beispielsweise die aktuelle Fahrzeuggeschwindigkeit ermittelt. Auf dieser Grundlage wird im nächsten Schritt 32 fortlaufend der noch zur Verfügung stehende Weg zum Rangieren und Bremsen des Fahrzeugs bis zum Erreichen der endgültigen Parkposition ermittelt. Diese Weginformation dient gemeinsam mit weiteren Randbedingungen wie beispielsweise einer maximalen Verzögerung, die aus Komfortgründen vorgegeben wird, oder einer maximalen Bremskraft ein Sollwert für das Bremssystem im folgenden Schritt 33 berechnet.

Die ersten drei Verfahrensschritte 30, 31 und 32 werden im übergeordneten Regel- bzw. Steuergerät 11 durchgeführt. Das Errechnen des Sollwertes für die selbsttätige Ansteuerung der hydraulischen Fahrzeugbremse im Schritt 33 gehört dagegen zu einem Wegregler 40, der einen Bremsdrucksteller in der hydraulischen Fahrzeugbremse ansteuert, insbesondere die Hydraulikpumpe des elektronischen Stabilitätsprogramms. Der Regler 40 kann gegebenenfalls Bestandteil des Regel- bzw. Steuergeräts 11 sein. Als Sollwert wird im Verfahrensschritt 33 ein Sollbremsdruck für die hydraulische Fahrzeugbremse ermittelt.

Der Sollbremsdruck aus dem Regler 40 wird anschließend im Bremssystem 1 einer Steuereinheit gemäß Verfahrensschritt 34 zugeführt, wobei die Steuereinheit wiederum Bestandteil des Regel- bzw. Steuergerätes 11 sein kann. In der Steuereinheit gemäß Schritt 34 wird überprüft, ob der erzeugte Sollbremsdruck innerhalb eines zulässigen Wertebereiches liegt. Ist dies der Fall, kann von einer vollen Funktionstüchtigkeit der hydraulischen Fahrzeugbremse ausgegangen werden und wird der Bremsdrucksteller - die Hydraulikpumpe des ESP-Systems - der hydraulischen Fahrzeugbremse zur Erzeugung des gewünschten Sollbremsdrucks gemäß Verfahrensschritt 35 angesteuert.

Ergibt dagegen die Überprüfung im Verfahrensschritt 34, dass der Sollbremsdruck einen zugeordneten Schwellenwert übersteigt, so muss davon ausgegangen werden, dass aufgrund der fortlaufenden, aktiven Erzeugung des Sollbremsdrucks der Anstieg auf einen Fehler in einer Komponente der hydraulischen Fahrzeugbremse zurückzuführen ist. Der im Regler 40 erzeugte Sollbremsdruck steigt im Fehlerfall an, da die gewünschte Fahrzeugverzögerung mit dem zuvor erzeugten Sollbremsdruck nicht erreicht werden konnte.

Mit dem Überschreiten des Schwellenwertes wird von dem Verfahrensschritt 34 zum folgenden Verfahrensschritt 36 verzweigt und ein Rückfallbremssystem angesteuert, das ergänzend oder alternativ zu der Ansteuerung des Bremsdruckstellers gemäß Schritt 35 aktiviert wird. Bei dem Rückfallbremssystem handelt es sich entweder ebenfalls um einen Bremsdrucksteller in der Fahrzeugbremse, beispielsweise dem elektromechanischen Bremskraftverstärker, der fahrerunabhängig angesteuert werden kann. Zusätzlich oder alternativ ist es auch möglich, die elektromechanische Bremsvorrichtung mit dem elektrischen Bremsmotor anzusteuern, um eine Fahrzeugverzögerung zu erreichen, mit der das Fahrzeug innerhalb des zur Verfügung stehenden Bremsweges bis zum Stillstand abgebremst wird.

Im nächsten Schritt 37 wird überprüft, ob das Fahrzeug den Stillstand erreicht hat. Ist dies der Fall, kann im letzten Schritt 38 das Fahrzeug im Stillstand gegen Wegrollen gesichert werden, indem entweder die elektromechanische Park- bzw. Feststellbremse arretiert oder in einem Getriebe das Fahrzeug mithilfe einer Getriebesperrklinke gegen Wegrollen gesichert wird.

## Patentansprüche

1. Verfahren zum selbsttätigen, fahrerunabhängigen Abbremsen eines Fahrzeugs, wobei ein Bremssystem des Fahrzeugs mit einer hydraulischen Fahrzeugbremse (1) und mit einem Rückfallbremssystem (13) ausgestattet ist, wobei der hydraulische Bremsdruck der hydraulischen Fahrzeugbremse (1) über einen einstellbaren Bremsdrucksteller einstellbar ist, wobei bei der Durchführung des selbsttätigen Abbremsvorgangs im Regelfall das Fahrzeug über eine Betätigung des Bremsdruckstellers gebremst wird, **dadurch gekennzeichnet dass** wird und das Rückfallbremssystem (13) zur Erzeugung einer Bremskraft für den Fall betätigt wird, dass ein in einem Regler der hydraulischen Fahrzeugbremse (1) selbsttätig bestimmter, in der hydraulischen Fahrzeugbremse (1) einzustellender Sollwert einen Schwellenwert übersteigt, und dass der einstellbare Bremsdrucksteller die Hydraulikpumpe eines elektronischen Stabilitätsprogramms oder ein elektromechanischer Bremskraftverstärker (10) ist.

2. Verfahren nach Anspruch 1, **dadurch gekennzeichnet, dass** der Abbremsvorgang zur selbsttätigen Durchführung eines Parkvorgangs erfolgt.

3. Verfahren nach Anspruch 1 oder 2, **dadurch gekennzeichnet, dass** der Sollwert ein einzustellender Sollbremsdruck in der hydraulischen Fahrzeugbremse (1) ist.

4. Verfahren nach einem der Ansprüche 1 bis 3, **dadurch gekennzeichnet, dass** der Sollwert auf der Grundlage einer Bremsvorgabe zum Abbremsen des Fahrzeugs bis zum Stillstand ermittelt wird.

5. Verfahren nach einem der Ansprüche 1 bis 4, **dadurch gekennzeichnet, dass** das Rückfallbremssystem (13) eine elektromechanische Bremsvorrichtung mit einem elektrischen Bremsmotor (13) ist, die bei einer Überschreitung des Schwellenwerts aktiviert wird.

6. Verfahren nach einem der Ansprüche 1 bis 5, **dadurch gekennzeichnet, dass** das Rückfallbremssystem ein zweiter hydraulischer Bremsdrucksteller (10) ist, der bei einer Überschreitung des Schwellenwerts aktiviert wird.

7. Verfahren nach Anspruch 6, **dadurch gekennzeichnet, dass** der zweite hydraulische Bremsdrucksteller ein elektromechanischer Bremskraftverstärker (10) ist, der bei einer Überschreitung des Schwellenwerts aktiviert wird.

8. Verfahren nach einem der Ansprüche 1 bis 7, **dadurch gekennzeichnet, dass** der Bremsdrucksteller eine Hydraulikpumpe eines elektronischen Stabilitätsprogramms ist, die bei einer Überschreitung des Schwellenwerts aktiviert wird.

9. Verfahren nach einem der Ansprüche 1 bis 8, **dadurch gekennzeichnet, dass** nach dem Stillstand das Fahrzeug mithilfe einer Getriebesperrklinke dauerhaft gegen Wegrollen gesichert wird.

10. Verfahren nach einem der Ansprüche 1 bis 9, **dadurch gekennzeichnet, dass** nach dem Stillstand das Fahrzeug mithilfe einer Feststellbremse dauerhaft gegen Wegrollen gesichert wird.

11. Regel- bzw. Steuergerät (11) zur Durchführung des Verfahrens nach einem der Ansprüche 1 bis 10.

12. Bremssystem in einem Fahrzeug, mit einer hydraulischen Fahrzeugbremse (1) mit einem einstellbaren Bremsdrucksteller und mit einem Rückfallbremssystem (13), mit einem Regel- bzw. Steuergerät (11) nach Anspruch 11 zur Ansteuerung der einstellbaren Komponenten des Bremssystems.

13. Bremssystem nach Anspruch 12, **dadurch gekennzeichnet, dass** das Rückfallbremssystem (13) eine elektromechanische Bremsvorrichtung mit einem elektrischen Bremsmotor (13) ist.

14. Fahrzeug mit einem Bremssystem nach einem der Ansprüche 12 bis 13.

## Claims

1. Method for the automatic, driver-independent braking of a vehicle, a brake system of the vehicle being equipped with a hydraulic vehicle brake (1) and with a fall-back brake system (13), it being possible for the hydraulic brake pressure of the hydraulic vehicle brake (1) to be set via an adjustable brake pressure adjuster, the vehicle as a rule being braked via an actuation of the brake pressure adjuster during the performance of the automatic braking operation, **characterized in that** the fall-back brake system (13) is actuated to generate a brake force for the case where a setpoint value which is to be set in the hydraulic vehicle brake (1) and is determined automatically in a regulator of the hydraulic vehicle brake (1) exceeds a threshold value, and **in that** the adjustable brake pressure adjuster is the hydraulic pump of an electronic stability program or an electromechanical brake booster (10).

2. Method according to Claim 1, **characterized in that** the braking operation takes place for the automatic performance of a parking operation.

3. Method according to Claim 1 or 2, **characterized in that** the setpoint value is a setpoint brake pressure which is to be set in the hydraulic vehicle brake (1).

4. Method according to one of Claims 1 to 3, **characterized in that** the setpoint value is determined on the basis of a braking specification for braking the vehicle to a standstill.

5. Method according to one of Claims 1 to 4, **characterized in that** the fall-back brake system (13) is an electromechanical brake device with an electric brake motor (13) which is activated if the threshold value is exceeded.

6. Method according to one of Claims 1 to 5, **characterized in that** the fall-back brake system is a second hydraulic brake pressure adjuster (10) which is activated if the threshold value is exceeded.

7. Method according to Claim 6, **characterized in that** the second hydraulic brake pressure adjuster is an electromechanical brake booster (10) which is activated if the threshold value is exceeded.

8. Method according to one of Claims 1 to 7, **characterized in that** the brake pressure adjuster is a hydraulic pump of an electronic stability program which is activated if the threshold value is exceeded.

9. Method according to one of Claims 1 to 8, **characterized in that**, once at a standstill, the vehicle is secured permanently against rolling away with the aid of a transmission locking pawl.

10. Method according to one of Claims 1 to 9, **characterized in that**, once at a standstill, the vehicle is secured permanently against rolling away with the aid of a parking brake.

11. Regulating or control unit (11) for carrying out the method according to one of Claims 1 to 10.

12. Brake system in a vehicle, with a hydraulic vehicle brake (1) with an adjustable brake pressure adjuster and with a fall-back brake system (13), with a regulating or control unit (11) according to Claim 11 for actuating the adjustable components of the brake system.

13. Brake system according to Claim 12, **characterized in that** the fall-back brake system (13) is an electromechanical brake device with an electric brake motor (13).

14. Vehicle with a brake system according to either of Claims 12 and 13.

## Revendications

1. Procédé permettant de freiner un véhicule de manière automatique et indépendante du conducteur, un système de freinage du véhicule étant équipé d'un frein de véhicule hydraulique (1) et d'un système de freinage de secours (13), la pression de freinage hydraulique du frein de véhicule hydraulique (1) étant réglable par un actionneur de pression de freinage réglable, dans lequel, lors de l'exécution du processus de freinage automatique, le véhicule est en règle générale freiné par un actionnement de l'actionneur de pression de freinage,
**caractérisé en ce que** le système de freinage de secours (13) est actionné pour produire une force de freinage au cas où une valeur de consigne, déterminée automatiquement dans un régulateur du frein de véhicule hydraulique (1) et à régler dans le frein de véhicule hydraulique (1), dépasse une valeur seuil, et **en ce que** l'actionneur de pression de freinage réglable est la pompe hydraulique d'un programme de stabilité électronique ou un servofrein électromécanique (10).

2. Procédé selon la revendication 1, **caractérisé en ce que** le processus de freinage est effectué pour l'exécution automatique d'un processus de stationnement.

3. Procédé selon la revendication 1 ou 2, **caractérisé en ce que** la valeur de consigne est une pression de freinage de consigne à régler dans le frein de véhicule hydraulique (1).

4. Procédé selon l'une quelconque des revendications 1 à 3, **caractérisé en ce que** la valeur de consigne est déterminée sur la base d'une spécification de freinage destinée à freiner le véhicule jusqu'à l'arrêt.

5. Procédé selon l'une quelconque des revendications 1 à 4, **caractérisé en ce que** le système de freinage de secours (13) est un dispositif de freinage électromécanique doté d'un moteur de freinage électrique (13) qui est activé lors d'un dépassement de la valeur seuil.

6. Procédé selon l'une quelconque des revendications 1 à 5, **caractérisé en ce que** le système de freinage de secours est un deuxième actionneur de pression de freinage hydraulique (10) qui est activé en cas de dépassement de la valeur seuil.

7. Procédé selon la revendication 6, **caractérisé en ce que** le deuxième actionneur de pression de freinage hydraulique est un servofrein électromécanique (10) qui est activé en cas de dépassement de la valeur seuil.

8. Procédé selon l'une quelconque des revendications 1 à 7, **caractérisé en ce que** l'actionneur de pression de freinage est une pompe hydraulique d'un programme de stabilité électronique qui est activée en cas de dépassement de la valeur seuil.

9. Procédé selon l'une quelconque des revendications 1 à 8, **caractérisé en ce qu'**après l'arrêt, le véhicule est sécurisé durablement à l'aide d'un loquet de blocage de boîte de vitesses pour ne pas rouler.

10. Procédé selon l'une quelconque des revendications 1 à 9, **caractérisé en ce qu'**après l'arrêt, le véhicule est sécurisé durablement à l'aide d'un frein de stationnement pour ne pas rouler.

11. Appareil de régulation ou de commande (11) permettant d'exécuter le procédé selon l'une quelconque des revendications 1 à 10.

12. Système de freinage dans un véhicule, comprenant un frein de véhicule hydraulique (1) doté d'un actionneur de pression de freinage réglable et d'un système de freinage de secours (13), comprenant un appareil de régulation ou de commande (11) selon la revendication 11 pour piloter les composants réglables du système de freinage.

13. Système de freinage selon la revendication 12, **caractérisé en ce que** le système de freinage de secours (13) est un dispositif de freinage électromécanique doté d'un moteur frein électrique (13).

14. Véhicule comprenant un système de freinage selon l'une quelconque des revendications 12 à 13.
